(19) Europäisches Patentamt
European Patent Office
Office européen des brevets

(11) **EP 4 071 119 A1**

(12) **EUROPÄISCHE PATENTANMELDUNG**

(43) Veröffentlichungstag:
**12.10.2022 Patentblatt 2022/41**

(21) Anmeldenummer: **22166762.9**

(22) Anmeldetag: **05.04.2022**

(51) Internationale Patentklassifikation (IPC):
**C03C 3/083** (2006.01) **C03C 21/00** (2006.01)

(52) Gemeinsame Patentklassifikation (CPC):
**C03C 21/002; C03C 3/083;** C03C 2203/52

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **07.04.2021 DE 102021108658**

(71) Anmelder: **SCHOTT AG**
**55122 Mainz (DE)**

(72) Erfinder:
• **LANGSDORF, Andreas**
**55218 Ingelheim am Rhein (DE)**
• **HEISS, Markus**
**65474 Bischofsheim (DE)**
• **GLÄßER, Vanessa**
**55130 Mainz (DE)**

(74) Vertreter: **Fuchs Patentanwälte Partnerschaft mbB**
**Westhafenplatz 1**
**60327 Frankfurt am Main (DE)**

(54) **VORSPANNBARER GLASARTIKEL MIT NEGATIVEM RELATIVEN THERMISCHEN LÄNGENÄNDERUNGSPOTENTIAL**

(57) Die vorliegende Erfindung betrifft einen vorspannbaren Glasartikel mit negativem relativen thermischen Längenänderungspotential sowie ein Verfahren zur Herstellung des Glasartikels.

Figur 1

**Beschreibung**

Die vorliegende Erfindung betrifft einen vorspannbaren Glasartikel mit negativem relativen thermischen Längenänderungspotential sowie ein Verfahren zur Herstellung des Glasartikels.

Bei einer Änderung der Temperatur kommt es zu einer Änderung der Länge eines Glasartikels. Eine Erhöhung der Temperatur ist mit einer Ausdehnung und eine Verringerung der Temperatur mit einem Schrumpfen des Glasartikels verbunden. Das Ausmaß der temperaturabhängigen Längenänderung wird in der Regel mit Hilfe des thermischen Ausdehnungskoeffizienten (englisch: "CTE" für ("coefficient of thermal expansion") beschrieben. Entsprechende temperaturabhängige Längenänderungen sind üblicherweise im Wesentlichen reversibel. Wird der Artikel beispielsweise von einer Temperatur T0 auf eine Temperatur T1 erwärmt, wobei die Länge des Artikels bei T1 größer ist als bei T0, und wird der Artikel anschließend wieder auf die Temperatur T0 abgekühlt, so entspricht die Länge des Artikels bei der Temperatur T0 vor der Erwärmung auf T1 im Wesentlichen der Länge des Artikels bei der Temperatur T0 nach der Abkühlung von T1 auf T0.

Darüber hinaus kann eine thermische Behandlung eines Glasartikels jedoch auch mit einer Längenänderung nach Abkühlung auf die Ausgangstemperatur T0 verbunden sein. Wird der Artikel beispielsweise von einer Temperatur T0 auf eine Temperatur T1 erwärmt und anschließend wieder auf die Temperatur T0 abgekühlt, so kann die Länge des Artikels bei der Temperatur T0 vor der Erwärmung auf T1 von der Länge des Artikels bei der Temperatur T0 nach der Abkühlung von T1 auf T0 abweichen. Dies ist häufig auf eine Änderung der fiktiven Temperatur des Glases durch die thermische Behandlung zurückzuführen.

Da Gläser bei der Herstellung nicht unendlich langsam gekühlt werden, haben sie in der Regel keine Zeit, den Gleichgewichtszustand einzunehmen, der ihrer jeweiligen Temperatur entspricht. Daher entspricht die Struktur eines Glases bei Raumtemperatur meist der Gleichgewichtsstruktur für eine höhere Temperatur. Diese wird als fiktive Temperatur bezeichnet. Die fiktive Temperatur ist also ein Maß für den Kühlzustand des Glases. Je höher die fiktive Temperatur, desto lockerer ist das Netzwerk.

Wird ein Glasartikel einer thermischen Behandlung unterzogen, insbesondere bei Temperaturen knapp unterhalb der Transformationstemperatur Tg (beispielsweise etwa 60 K unterhalb von Tg), kann die fiktive Temperatur gesenkt werden. Das Netzwerk wird dichter, so dass der Artikel bei erneuter Abkühlung auf die Ausgangstemperatur (beispielsweise Raumtemperatur) eine geringere Länge aufweist als vor der thermischen Behandlung. Man spricht in diesem Zusammenhang auch von einem sogenannten "thermischen Schrumpf".

Derartige anhaltende Längenänderungen durch eine thermische Behandlung sind nicht zwangsläufig ein Schrumpf des Artikels. Insbesondere kann es auch dazu kommen, dass eine Erwärmung von T0 auf T1 und eine anschließende Abkühlung von T1 auf T0 mit einer Vergrößerung der Länge des Artikels verbunden ist.

Um sowohl ein Schrumpfen als auch eine Ausdehnung eines Glasartikels nach einer thermischen Behandlung begrifflich fassen zu können, wird die entsprechende Eigenschaft eines Glasartikels vorliegend als "*relatives thermisches Längenänderungspotential*" beschrieben.

Üblicherweise weisen Glasmaterialien aller Art ein gewisses Maß an "relativem thermischem Längenänderungspotential" auf. Dies bedeutet, dass sich beispielsweise bei einer Temperung in einem geeigneten Temperaturbereich (insbesondere knapp unterhalb der Transformationstemperatur Tg, beispielsweise etwa 60 K unterhalb von Tg) oder auch bei gewissen thermischen Belastungen aus Bearbeitungsprozessen die Länge eines Glasartikels vor und nach der thermischen Behandlung unterscheiden kann. Eine Ausdehnung des Artikels wird als Längenänderung mit einem positiven Vorzeichen beschrieben, während ein Schrumpfen des Artikels als Längenänderung mit einem negativen Vorzeichen beschrieben wird.

Theoretisch beschreibt das relative thermische Längenänderungspotential die maximal mögliche relative thermische Längenänderung für eine gegebene Haltetemperatur unabhängig von kinetischen Betrachtungen. Generell ist die relative thermische Längenänderung jedoch eine zeitabhängige Größe. Je länger die Temperung oder thermische Belastung bei einer gegebenen Temperatur andauert, desto größer die relative thermische Längenänderung. Bei Temperaturen unterhalb von Tg nähert sich die fiktive Temperatur allerdings asymptotisch der Umgebungstemperatur an. Die relative thermische Längenänderung pro Zeiteinheit wird mit zunehmender Zeit der Temperung oder thermischen Belastung geringer, erreicht jedoch mathematisch niemals einen Stillstand. Um das relative thermische Längenausdehnungspotential praktisch bestimmen zu können, muss daher ein sinnvoller Zeitraum der thermischen Behandlung festgelegt werden, da es nicht möglich ist, den Artikel für unendlich lange Zeit zu tempern. Ein Zeitraum von 24 Stunden hat sich als geeigneter Zeitraum für die Bestimmung des relativen thermischen Längenänderungspotentials erwiesen. Nach Ablauf von 24 Stunden findet keine relevante Änderung der fiktiven Temperatur mehr statt.

Das relative thermische Längenänderungspotential wird daher erfindungsgemäß mittels einer thermischen Behandlung ermittelt, die ein Halten des Glasartikels bei einer vorgegebenen Temperatur knapp unterhalb von Tg (insbesondere etwa 60 K unterhalb von Tg) für 24 Stunden beinhaltet. Das relative thermische Längenänderungspotential kann durch einen Vergleich der Längen vor und nach der thermischen Behandlung bestimmt werden.

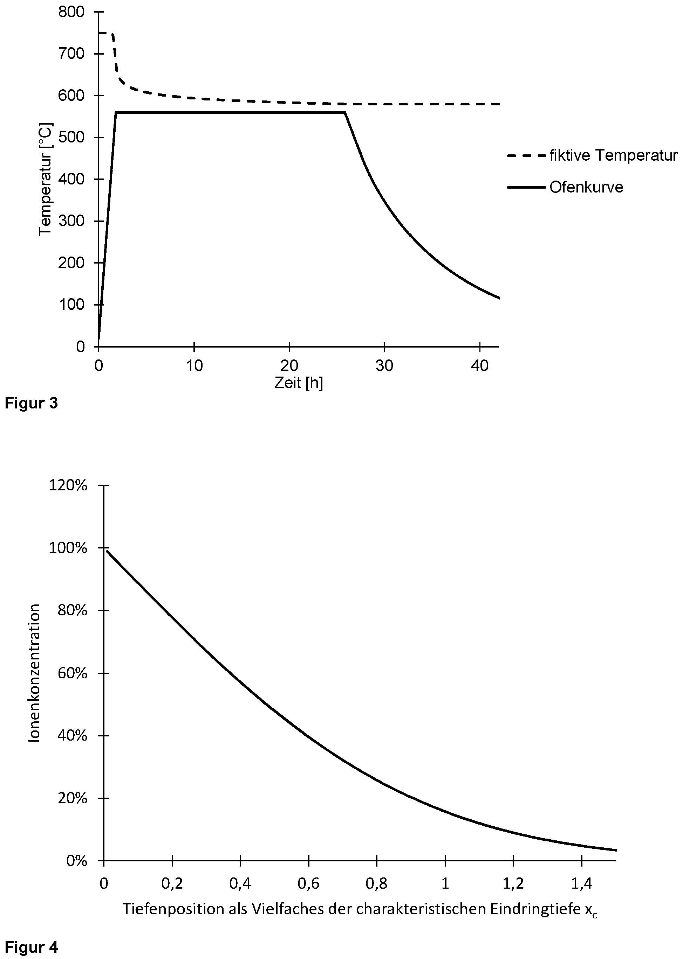

Das Temperatur-Zeit-Profil der thermischen Behandlung und die genaue Bestimmung der Längen vor und nach der thermischen Behandlung sind weiter unten im Detail beschrieben. Ein besonders bevorzugter Verlauf der Ofentemperatur ist beispielhaft in Figur 3 gezeigt. In Figur 3 ist auch der Verlauf der fiktiven Temperatur eines erfindungsgemäßen Beispielartikels bei entsprechender thermischer Behandlung gezeigt.

In Glasherstellungsprozessen wird das Glas - außer gegebenenfalls bei optischen Spezialgläsern - in der Regel nicht beliebig langsam gekühlt, um kostenaufwändige Kühlprozesse zu vermeiden. Daraus ergibt sich ein Kühlzustand des Glases, der mit einem Schrumpfen des Glases, also mit einem negativen relativen thermischen Längenänderungspotential, bei Temperung oder thermischer Belastung verbunden ist. Man spricht in diesem Zusammenhang auch von Gläsern mit einer vergleichsweise hohen fiktiven Temperatur. Auch bei Gläsern, die aus Ziehprozessen erhalten werden, tritt dieser Effekt auf.

Falls eine relative thermische Längenänderung für einen Anwendungsfall mit bestimmter Temperaturbelastung verringert oder ausgeschlossen werden soll, können die Gläser einer Temperung unterzogen werden. Durch die Temperung wird die fiktive Temperatur des Glases gesenkt. Es ist möglich, die fiktive Temperatur so weit zu senken, dass es bei einer erneuten Temperung oder thermischer Belastung zu keinem nennenswerten weiteren Schrumpfen des Glases mehr kommt, so dass das relative thermische Längenänderungspotential nahezu null beträgt. Die Senkung der fiktiven Temperatur durch Temperung kann in einem der Herstellung des Glases nachfolgenden Schritt erfolgen. Es ist auch möglich die Temperung als Teil des Herstellungsverfahrens vorzusehen. Hierzu können sogenannte Kühlofen vorgesehen sein, durch die die Abkühlgeschwindigkeit des Glases unmittelbar nach der Formgebung reduziert werden kann. Die praktikable Länge eines solchen Kühlofens reicht jedoch nicht aus, um das relative thermische Längenänderungspotential auf einen Wert in der Nähe von Null abzusenken. Zusätzlich kann bei einer Herstellung in einem Ziehverfahren wie beispielsweise einem Downdraw-Verfahren die Ziehgeschwindigkeit reduziert werden. Dadurch kommt es zu einer langsameren Kühlung und infolgedessen werden Gläser mit reduzierter fiktiver Temperatur erhalten, so dass das Ausmaß des Schrumpfes bei einer thermischen Belastung des Glases unterhalb der aktuellen fiktiven Temperatur reduziert ist.

Eine Aufgabe der vorliegenden Erfindung ist es daher, einen Glasartikel mit verbessertem Kühlzustand bereitzustellen. Der Artikel soll insbesondere einen Kühlzustand aufweisen, der derart ist, dass sich nach chemischer Vorspannung auf eine Tiefe $x_c$ von 30% der Artikeldicke ein relatives thermisches Längenänderungspotential ergibt, das kleiner oder gleich 0 ppm ist. Das sich einstellende relative thermische Längenänderungspotential soll allerdings auch nicht so sehr negativ sein, dass nach dem Vorspannen besonders stark getempert werden muss, um einen Glasartikel mit einem relativen thermischen Längenänderungspotential von null zu erhalten. Unter chemischer Vorspannung auf 30% der Artikeldicke wird insbesondere beidseitiges chemisches Vorspannen auf eine Tiefe $x_c$ von jeweils 30% der Artikeldicke verstanden.

Die Aufgabe wird durch die vorliegende Erfindung gelöst.

Der Glasartikel der vorliegenden Erfindung ist ein vorspannbarer Glasartikel, insbesondere ein chemisch vorspannbarer Glasartikel. Üblicherweise findet beim chemischen Vorspannen ein Austausch von Natrium gegen Kalium statt, insbesondere indem ein Natrium-haltiges Glas bei erhöhter Temperatur einem geschmolzenen Kaliumsalz, beispielsweise $KNO_3$ ausgesetzt wird. Der vorspannbare Glasartikel der Erfindung umfasst daher bevorzugt Natriumionen, um einen entsprechenden Ionenaustausch zu ermöglichen. Alternativ oder zusätzlich kann der Glasartikel auch Lithiumionen umfassen, da das chemische Vorspannen ebenso den Austausch von Lithium gegen Natrium und/oder Kalium umfassen kann.

In der Austauschschicht ist die Zusammensetzung des Artikels im Vergleich zum Bulk verändert. Insbesondere ist in der Austauschschicht der Anteil mindestens einer, bevorzugt genau einer Ionenspezies im Vergleich zum Bulk erhöht und der Anteil mindestens einer, bevorzugt genau einer Ionenspezies im Vergleich zum Bulk verringert. Besonders bevorzugt weist die Austauschschicht einen geringeren Anteil an $Na^+$-Ionen und einen höheren Anteil an $K^+$-Ionen auf als die Bulkschicht. Als Austauschschicht(en) werden also bevorzugt die Bereiche des Artikels bezeichnet, in denen die Zusammensetzung des Artikels durch das chemische Vorspannen im Vergleich zum Ausgangsglas verändert wurde. Die Bulkschicht ist demgegenüber bevorzugt der Bereich des Artikels, dessen Zusammensetzung durch das chemische Vorspannen nicht verändert wurde. Dies gilt natürlich nur für solche Ausführungsformen, in denen es einen Bereich gibt, dessen Zusammensetzung durch das chemische Vorspannen nicht verändert wurde. Allgemeiner betrachtet ist die Bulkschicht der Bereich des Artikels (insbesondere des Glases), in dem der Anteil an Ionv am größten und dementsprechend der Anteil an $Ion_E$ am geringsten ist. Als Austauschschicht(en) werden im Umkehrschluss die Bereiche bezeichnet, in denen im Vergleich zum Bulk der Anteil an Ionv verringert und der Anteil an $Ion_E$ erhöht ist. Erfindungsgemäß wird die Ionenart mit einem im Vergleich zum Bulk erhöhten Anteil in der Austauschschicht als $Ion_E$ (für $Ion_{Erhöht}$) und die Ionenart mit einem im Vergleich zum Bulk verringerten Anteil in der Austauschschicht als $Ion_V$ (für $Ion_{Verringert}$) bezeichnet. $Ion_E$ ist bevorzugt $K^+$ und $Ion_V$ ist bevorzugt $Na^+$.

Bedingt durch den Prozess des chemischen Härtens sind die Anteile der am Austauschprozess beteiligten Ionen innerhalb der Austauschschicht nicht über die gesamte Dicke der Schicht gleich verteilt. Vielmehr ergibt sich jeweils ein Gradient von der Artikeloberfläche hin zur Bulkschicht. Bei den Ionen mit in der Austauschschicht im Vergleich zur Bulkschicht erhöhten Anteilen ergibt sich der höchste Anteil an der Artikelzusammensetzung an der Artikeloberfläche.

Dieser sinkt dann nach innen hin ab. Bei den Ionen mit in der Austauschschicht im Vergleich zur Bulkschicht verringerten Anteilen verhält es sich gerade umgekehrt. Ihr Anteil ist an der Artikeloberfläche am geringsten und steigt dann nach innen hin an.

Man darf sich also Austauschschicht und Bulkschicht nicht als voneinander getrennte Schichten vorstellen. Vielmehr sollen die entsprechenden Begriffe lediglich zum Ausdruck bringen, dass es im Artikel Bereiche gibt, in denen durch den Austauschprozess bedingt die Anteile einzelner Ionenspezies deutlich erhöht beziehungsweise verringert wurden (die mindestens eine Austauschschicht), während die Anteile der entsprechenden Ionen in anderen Bereichen des Artikels nicht oder nur in geringem Maße durch den Austauschprozess verändert wurden (die Bulkschicht). Wie unten beschrieben nähert sich der Anteil, der am Austauschprozess beteiligten Ionen in der Austauschschicht asymptotisch dem entsprechenden Anteil in der Bulkschicht an, so dass es schwierig ist, die exakte Position des Übergangs der Austauschschicht in die Bulkschicht anzugeben. Daher ist es üblich, nicht die exakte Tiefe der Austauschschicht anzugeben, sondern stattdessen das Ausmaß des Austausches auf andere Art und Weise zu charakterisieren. Erfindungsgemäß wird in diesem Zusammenhang die unten im Detail beschriebene charakteristische Eindringtiefe $x_c$ verwendet. Bei einer Tiefe von $x = 2 \cdot x_c$ entspricht die Artikelzusammensetzung abgesehen von vernachlässigbaren Abweichungen wieder der Zusammensetzung im Bulk. Vernachlässigbare Abweichungen sind bevorzugt Abweichungen im Gehalt einzelner Komponenten von jeweils $\pm$ 1%, weiter bevorzugt $\pm$ 0,5% im Vergleich zum Gehalt im Bulk.

Die Veränderung der Anteile der am Ionenaustauschprozess beteiligten Ionen verläuft in der Regel nicht linear, wie oben bereits angedeutet. Vielmehr kann der Verlauf der Anteile zumindest bei einem einfachen Austauschprozess durch eine (komplementäre) Fehlerfunktion beschrieben werden. Die Fehlerfunktion wird oft auch "gaußsche Fehlerfunktion" genannt. In der Regel kürzt man die Fehlerfunktion als "*erf*" und die komplementäre Fehlerfunktion als "*erfc*" ab. Figur 4 skizziert beispielhaft den durch den Austauschprozess bedingten Verlauf des Gehalts eines Ions, dessen Anteil in der Austauschschicht im Vergleich zur Bulkglasschicht erhöht ist (beispielsweise $K^+$). Der Gehalt beträgt 100% an der Glasoberfläche (x=0) und sinkt zum Inneren des Glases hin basierend auf einer komplementären Fehlerfunktion (erfc) ab. Die Darstellung ist so gewählt, dass 100% dem maximalen Unterschied des Anteils des betreffenden Ions gegenüber dem Anteil im Bulk entspricht, während 0% zum Ausdruck bringt, dass kein Unterschied zum Bulk besteht. Der Ausdruck 0% bedeutet also nicht, dass der Anteil des Ions in der entsprechenden Tiefe 0% beträgt. Vielmehr wird zum Ausdruck gebracht, dass kein Unterschied zum Anteil im Bulk besteht. Bei 0% befindet man sich also nicht mehr in der Austauschschicht, sondern im Bulk.

Der Kurvenverlauf lässt sich für die Ionen mit in der Austauschschicht im Vergleich zur Bulkschicht erhöhten

$$c(x,t) = \mathrm{erfc}\left(\frac{x}{2 \cdot \sqrt{D \cdot t}}\right)$$

Anteilen durch die folgende Gleichung beschreiben: , wobei x die relative Artikeltiefenposition, D den Diffusionskoeffizienten und t die Vorspannzeit bezeichnet.

Für die Ionen mit in der Austauschschicht im Vergleich zur Bulkschicht verringerten Anteilen lässt sich der Kurvenverlauf durch die folgende Gleichung beschreiben:

$$c(x,t) = \mathrm{erf}\left(\frac{x}{2 \cdot \sqrt{D \cdot t}}\right) = 1 - \mathrm{erfc}\left(\frac{x}{2 \cdot \sqrt{D \cdot t}}\right)$$

, wobei x die relative Artikeltiefenposition, D den Diffusionskoeffizienten und t die Vorspannzeit bezeichnet.

Der Diffusionskoeffizient D ist für verschiedene Kombinationen der am Austausch beteiligten Ionenspezies und für verschiedene Temperaturen sowie für verschiedene Materialien unterschiedlich. Der Diffusionskoeffizient D wird in der Einheit $m^2/s$ gemessen. Aus dem Diffusionskoeffizienten D und der Vorspannzeit t lässt sich die charakteristische Eindringtiefe $x_c$ berechnen durch die folgende Gleichung:

$$x_c = 2 \cdot \sqrt{D \cdot t}$$

Die Vorspannzeit t ist die Zeit, während der der Artikel im Vorspannbad ist. Diese Zeit kann automatisiert oder mittels manueller Zeitmessung bestimmt werden. Der Diffusionskoeffizient D kann erfindungsgemäß mit einer Vielzahl unterschiedlicher Methoden bestimmt werden. Bevorzugt wird der Diffusionskoeffizient über ein Tiefenprofil der ausgetauschten Ionen nach definierter Vorspanntemperatur und Zeit berechnet. Dieses Tiefenprofil kann beispielsweise mit EDX (Energiedispersive Röntgenspektroskopie) gemessen werden. Alternativ kann die ToF-SIMS-Methode (Time-of-Flight Secondary Ion Mass Spectrometry) verwendet werden. Bei der ToF-SIMS-Methode wird mit einem Ionenstrahl Material aus der Artikeloberfläche herausgeschlagen und dann die Zusammensetzung der so erzeugten Ionen gemessen. Durch das Herausschlagen des Materials "*bohrt*" man sich in die Tiefe des Artikels hinein und kann Veränderungen

im Ionenprofil nachweisen. Weitere geeignete Verfahren sind dem Fachmann bekannt.

Für x = $x_c$ gilt also:

$$c(x_c) = \mathrm{erfc}(1) \approx 15{,}7\%$$

Bei einer Tiefe von x = $x_c$ beträgt also der über den Grundanteil hinausgehende Anteil der Ionen mit in der Austauschschicht im Vergleich zur Bulkschicht erhöhten Anteilen etwa 15,7% des an der Glasoberfläche befindlichen maximalen Überschussanteils. Somit lässt sich $x_c$ nicht nur aus dem Diffusionskoeffizienten D und der Vorspannzeit t nach oben genannter Formel berechnen, sondern auch anhand des beispielsweise mittels EDX oder ToF-SIMS ermittelten Tiefenprofils als diejenige Tiefe x bestimmen, bei der der über den Grundanteil hinausgehende Anteil der Ionen mit in der Austauschschicht im Vergleich zur Bulkschicht erhöhten Anteilen etwa 15,7% des an der Glasoberfläche befindlichen maximalen Überschussanteils beträgt. Das Anfitten der komplementären Fehlerfunktion an die Messdaten kann beispielsweise mit der Methode der kleinsten Quadrate (englisch: "method of least squares") erfolgen. Wie oben beschrieben wird derart angefittet, dass 100% dem maximalen Unterschied des Anteils des betreffenden Ions gegenüber dem Anteil im Bulk entspricht, während 0% zum Ausdruck bringt, dass kein Unterschied zum Bulk besteht (siehe auch Figur 4).

Der oben beschriebene Diffusionskoeffizient D (auch als Diffusionsvermögen D oder als Grenzwert für das Diffusionsvermögen D bezeichnet (englisch: "diffusivity D" oder "threshold diffusivity D")) ist ein Maß für die Vorspannbarkeit. Die Angabe des Diffusionsvermögens bringt nicht zum Ausdruck, dass ein Glas tatsächlich chemisch vorgespannt wurde. Das Diffusionsvermögen ist vielmehr ein Maß für die Vorspannbarkeit eines Glases.

Bei chemischem Vorspannen in $KNO_3$ bei 380°C für 46 Minuten liegt das Diffusionsvermögen D bevorzugt in einem Bereich von 10 $\mu m^2$ pro Stunde bis 80 $\mu m^2$ pro Stunde, beispielsweise von 15 $\mu m^2$ pro Stunde bis 80 $\mu m^2$ pro Stunde, oder von 20 $\mu m^2$ pro Stunde bis 80 $\mu m^2$ pro Stunde, insbesondere von 25 $\mu m^2$ pro Stunden bis 70 $\mu m^2$ pro Stunde oder von 30 $\mu m^2$ pro Stunde bis 60 $\mu m^2$ pro Stunde. Das Diffusionsvermögen D kann bei chemischem Vorspannen in $KNO_3$ bei 380°C für 46 Minuten beispielsweise mindestens 10 $\mu m^2$ pro Stunde, mindestens 15 $\mu m^2$ pro Stunde, mindestens 20 $\mu m^2$ pro Stunde, mindestens 25 $\mu m^2$ pro Stunden oder mindestens 30 $\mu m^2$ pro Stunde betragen. Das Diffusionsvermögen D kann bei chemischem Vorspannen in $KNO_3$ bei 380°C für 46 Minuten beispielsweise höchstens 80 $\mu m^2$ pro Stunde, höchstens 70 $\mu m^2$ pro Stunde oder höchstens 60 $\mu m^2$ pro Stunde betragen. Wenn in dieser Offenbarung auf Zahlenwerte des Diffusionsvermögens D Bezug genommen wird, so ist das Diffusionsvermögen D für chemisches Vorspannen in $KNO_3$ bei 380°C für 46 Minuten gemeint, sofern nichts anderes angegeben ist.

Wie oben beschrieben können sich Artikel mit reduzierter fiktiver Temperatur als vorteilhaft erweisen, um das Ausmaß des Schrumpfes bei thermischer Belastung des Artikels unterhalb der fiktiven Temperatur zu reduzieren. Es hat sich herausgestellt, dass bestimmte Nachbearbeitungsschritte eines Glases ebenfalls zu einer Verschiebung des relativen thermischen Längenänderungspotentials hin zu weniger negativen Werten führen können. Ein besonders relevanter Nachbearbeitungsschritt ist das chemische Vorspannen eines Glases. Beim chemischen Vorspannen (auch chemisches Härten genannt) werden kleinere Ionen in einem Ionenaustauschprozess durch größere Ionen ersetzt. Üblicherweise findet ein Austausch von Natrium gegen Kalium statt, insbesondere indem ein Natrium-haltiges Glas bei erhöhter Temperatur einem geschmolzenen Kaliumsalz, beispielsweise $KNO_3$ ausgesetzt wird. Der Einfluss des chemischen Härtens auf das relative thermische Längenänderungspotential unterscheidet sich dahingehend vom Einfluss der oben beschriebenen Temperung, dass durch das chemische Härten nicht nur eine Verschiebung des relativen thermischen Längenänderungspotentials hin zu weniger negativen Werten möglich ist, sondern dass sich nach dem chemischen Vorspannen ein relatives thermisches Längenänderungspotential mit positivem Vorzeichen einstellen kann. Werden solche Gläser nach dem Vorspannen erneut einer thermischen Belastung ausgesetzt, kommt es also nicht zu einem Schrumpfen, sondern zu einer Ausdehnung des Glases. Dies kann sich insofern als besonders nachteilig herausstellen, als dass keine Möglichkeit zu einer erneuten Senkung des relativen thermischen Längenänderungspotentials besteht. Ein relatives thermisches Längenänderungspotential von null oder nahezu null kann mit solchen Gläsern also nicht mehr erreicht werden. Gläser mit einem negativen relativen thermischen Längenänderungspotential nach dem chemischen Vorspannen können hingegen durch eine Temperung in einen Kühlzustand überführt werden, der einem relativen thermischen Längenänderungspotential von nahezu null entspricht. Dies ist bei Gläsern mit positivem relativem thermischen Längenänderungspotential nicht möglich, da eine Temperung das relative thermische Längenänderungspotential nicht hin zu negativeren Werten verschieben kann.

Durch das chemische Vorspannen wird das relative thermische Längenänderungspotential hin zu weniger negativen oder sogar zu positiven Werten hin verschoben. Je größer die charakteristische Eindringtiefe $x_c$ im Vergleich zur Dicke des Glasartikels ist, desto größer ist das Ausmaß dieser Änderung des relativen thermischen Längenänderungspotentials durch das chemische Vorspannen. Der Effekt hat daher bei dünne Gläsern und Dünnstgläsern eine besonders hohe Relevanz, da bei diesen Gläsern die charakteristische Eindringtiefe $x_c$ im Verhältnis zu Artikeldicke häufig besonders hoch ist. Es ist keine Seltenheit, dass die charakteristische Eindringtiefe $x_c$ 30% der Dicke des Glasartikels ausmacht. Unter chemischer Vorspannung auf 30% der Artikeldicke wird insbesondere beidseitiges chemisches Vorspannen auf eine charakteristische Eindringtiefe $x_c$ von jeweils 30% der Artikeldicke verstanden. Bei flächigen Substraten wird in der Regel beidseitig möglichst symmetrisch vorgespannt, da es ansonsten zur Ausbildung von massivem Warp kommen würde.

Um zu vermeiden, dass das relative thermische Längenänderungspotential durch das chemische Vorspannen derart weit zu weniger negativen Werten hin verschoben wird, dass sich nach dem Vorspannen ein relatives thermisches Längenänderungspotential mit positivem Vorzeichen ergibt, müssten Glasartikel bereitgestellt werden, die vor dem Vorspannen ein ausreichend negatives relatives thermisches Längenänderungspotential aufweisen, so dass die Verschiebung hin zu weniger negativen Werten durch das Vorspannen nicht ausreicht, um nach dem Vorspannen ein relatives thermisches Längenänderungspotential mit positivem Vorzeichen zu erhalten. Andererseits sollte das relative thermische Längenänderungspotential vor dem Vorspannen auch nicht so negativ sein, dass nach dem Vorspannen immer noch ein sehr stark negatives relatives thermisches Längenänderungspotential vorliegt. Denn dies hätte zur Folge, dass der Glasartikel einer besonders aufwendigen Temperung unterzogen werden müsste, um einen Glasartikel mit einem relativen thermischen Längenänderungspotential von null oder nahezu null zu erhalten, was je nach Anwendungsfall gewünscht sein kann.

Wie beschrieben, betrifft die vorliegende Erfindung einen vorspannbaren Glasartikel. Die Erfindung betrifft außerdem auch einen vorgespannten Glasartikel, insbesondere einen chemisch vorgespannten Glasartikel.

Glasartikel mit besonders geringen Dicken, insbesondere mit Dicken von weniger als 100 µm, werden in der Regel in einem Ziehverfahren hergestellt, insbesondere mit einem Downdraw-Verfahren. Der Kühlzustand des Glasartikels wird maßgeblich durch die Abkühlrate und damit durch die Ziehrate (auch Ziehgeschwindigkeit genannt) bestimmt. Um einen Glasartikel mit einem Kühlzustand zu erhalten, der es ermöglicht, dass auch nach einem chemischen Vorspannen auf eine Tiefe $x_c$ von 30% der Artikeldicke das relative thermische Längenänderungspotential kleiner oder gleich null ist, müssen hohe Ziehraten angewandt werden. Dadurch erhält man Glasartikel mit derart negativem relativen thermischen Längenänderungspotential, dass dieses durch das chemische Vorspannen auf eine Tiefe $x_c$ von 30% der Artikeldicke nicht zu Werten mit positivem Vorzeichen hin überkompensiert wird. Die Ziehraten sollen allerdings auch nicht zu groß sein, da ansonsten auch nach dem chemischen Vorspannen noch ein sehr negatives relatives thermisches Längenänderungspotential vorliegt, so dass eine intensive Temperung benötig würde, um einen Glasartikel mit einem relativen thermischen Längenänderungspotential von null oder nahezu null zu erhalten.

Welche Ziehraten den gewünschten Erfolg bringen, hängt von der Glaszusammensetzung ab. Es ist also nicht möglich die in Bezug auf eine bestimmte Glaszusammensetzung optimierte Ziehrate einfach eins zu eins auf eine andere Glaszusammensetzung zu übertragen. Um im Einzelfall eine geeignete Ziehrate zu finden, können verschiedene Ziehraten getestet und deren Einfluss auf das relative thermische Längenänderungspotential untersucht werden. Vielversprechender Ausgangspunkt sind beispielsweise Ziehraten in einem Bereich von 10 m/min bis 40 m/min.

In einem ersten Aspekt betrifft die Erfindung einen vorspannbaren Glasartikel mit einer Dicke von weniger als 100 µm und einem Kühlzustand, der derart ist, dass der Glasartikel nach chemischer Vorspannung auf eine Tiefe $x_c$ von 30% der Artikeldicke ein relatives thermisches Längenänderungspotential in einem Bereich von -1500 ppm bis $\leq 0$ ppm aufweist.

Unter chemischer Vorspannung auf 30% der Artikeldicke wird insbesondere beidseitiges chemisches Vorspannen auf eine Tiefe von jeweils 30% der Artikeldicke verstanden.

Der vorspannbare Glasartikel der Erfindung weist einen bestimmten Kühlzustand auf. Dieser wird mit einem Messverfahren bestimmt, bei dem der vorspannbare Glasartikel zunächst chemisch auf eine Tiefe $x_c$ von 30% der Artikeldicke vorgespannt und im Anschluss das relative thermische Längenänderungspotential des vorgespannten Artikels bestimmt wird. Das relative thermische Längenänderungspotential des vorgespannten Artikels ist ein Maß für den Kühlzustand des vorspannbaren Glasartikels. Wie das relative thermische Längenänderungspotential bestimmt wird, ist weiter unten im Detail beschrieben. Zur Bestimmung des relativen thermischen Längenänderungspotentials des vorgespannten Glasartikels werden insbesondere Längen des vorgespannten Glasartikels vor und nach einer thermischen Behandlung bestimmt und miteinander verrechnet. Im Zuge der thermischen Behandlung wird der vorgespannte Glasartikel insbesondere auf eine Temperatur von etwa 60 K unterhalb von Tg erwärmt und für 24 Stunden bei dieser Temperatur gehalten.

In einem zweiten Aspekt betrifft die Erfindung einen vorspannbaren Glasartikel mit einer Änderungsrate des relativen thermischen Längenänderungspotentials in Abhängigkeit von der charakteristischen Eindringtiefe $x_c$ in einem Bereich von 30 ppm pro µm $x_c$ bis 1000 ppm pro µm $x_c$.

Der Glasartikel der Erfindung ist ein vorspannbarer Glasartikel. Der Glasartikel ist insbesondere nicht vorgespannt, beispielsweise nicht chemisch vorgespannt und/oder nicht thermisch vorgespannt. In einigen Ausführungsformen kann der vorspannbare Glasartikel auch ein bereits vorgespannter Glasartikel sein. Insbesondere ist es möglich einen bereits zu einem gewissen Grad vorgespannten Glasartikel weiter vorzuspannen.

Besonders bevorzugt liegt das relative thermische Längenänderungspotential nach chemischer Vorspannung auf eine Tiefe $x_c$ von 30% der Artikeldicke in einem Bereich von -1500 ppm bis $\leq 0$ ppm, beispielsweise von -1200 ppm bis < 0 ppm, von -1000 ppm bis -100 ppm, von -950 ppm bis -200 ppm, von -900 ppm bis -250 ppm, von -850 ppm bis -300 ppm, oder von -800 ppm bis-400 ppm. Das relative thermische Längenänderungspotential nach chemischer Vorspannung auf eine Tiefe $x_c$ von 30% der Artikeldicke kann beispielsweise mindestens -1500 ppm betragen, insbesondere mindestens -1200 ppm, mindestens -1000 ppm, mindestens -950 ppm, mindestens -900 ppm, mindestens -850 ppm, oder mindestens -800 ppm. Das relative thermische Längenänderungspotential nach chemischer Vorspannung auf eine Tiefe $x_c$ von 30% der Artikeldicke kann beispielsweise höchstens 0 ppm betragen, insbesondere weniger als 0 ppm, höchstens -100 ppm, höchstens -200 ppm, höchstens -250 ppm, höchstens -300 ppm, oder höchstens -400 ppm.

Die Oberflächendruckspannung (englisch: "CS" (für "compressive stress")) nach der chemischen Vorspannung auf eine Tiefe $x_c$ von 30% der Artikeldicke kann insbesondere in einem Bereich von 600 MPa bis 1000 MPa, beispielsweise von 650 MPa bis 900 MPa oder von 700 MPa bis 850 MPa liegen. Die Oberflächendruckspannung nach der chemischen Vorspannung auf eine Tiefe $x_c$ von 30% der Artikeldicke kann beispielsweise mindestens 600 MPa, mindestens 650 MPa oder mindestens 700 MPa betragen. Die Oberflächendruckspannung nach der chemischen Vorspannung auf eine Tiefe $x_c$ von 30% der Artikeldicke kann beispielsweise höchstens 1000 MPa, höchstens 900 MPa oder höchstens 850 MPa betragen. Die Oberflächendruckspannung kann mit einem Oberflächenspannungsmessgerät, insbesondere mit FSM 6000, gemessen werden.

Das Problem, dass das relative thermische Längenänderungspotential durch das chemische Vorspannen in den positiven Wertebereich verschoben wird, ergibt sich insbesondere bei solchen Gläsern, die eine verhältnismäßig große Abhängigkeit des relativen thermischen Längenänderungspotentials von der charakteristischen Eindringtiefe $x_c$ aufweisen. Glasartikel der vorliegenden Erfindung können insbesondere eine Änderungsrate des relativen thermischen Längenänderungspotentials in Abhängigkeit von der charakteristischen Eindringtiefe $x_c$ in einem Bereich von 30 ppm pro $\mu$m $x_c$ bis 1000 ppm pro $\mu$m $x_c$ aufweisen, beispielsweise in einem Bereich von 35 ppm pro $\mu$m $x_c$ bis 700 ppm pro $\mu$m $x_c$, von 40 ppm pro $\mu$m $x_c$ bis 500 ppm pro $\mu$m $x_c$, von 45 ppm pro $\mu$m $x_c$ bis 400 ppm pro $\mu$m $x_c$, von 50 ppm pro $\mu$m $x_c$ bis 350 ppm pro $\mu$m $x_c$, von 55 ppm pro $\mu$m $x_c$ bis 300 ppm pro $\mu$m $x_c$, von 60 ppm pro $\mu$m $x_c$ bis 250 ppm pro $\mu$m $x_c$, von 65 ppm pro $\mu$m $x_c$ bis 200 ppm pro $\mu$m $x_c$, von 70 ppm pro $\mu$m $x_c$ bis 150 ppm pro $\mu$m $x_c$, oder von 75 ppm pro $\mu$m $x_c$ bis 100 ppm pro $\mu$m $x_c$. Die Änderungsrate des relativen thermischen Längenänderungspotentials in Abhängigkeit von der charakteristischen Eindringtiefe $x_c$ kann beispielsweise mindestens 30 ppm pro $\mu$m $x_c$, mindestens 35 ppm pro $\mu$m $x_c$, mindestens 40 ppm pro $\mu$m $x_c$, mindestens 45 ppm pro $\mu$m $x_c$, mindestens 50 ppm pro $\mu$m $x_c$, mindestens 55 ppm pro $\mu$m $x_c$, mindestens 60 ppm pro $\mu$m $x_c$, mindestens 65 ppm pro $\mu$m $x_c$, mindestens 70 ppm pro $\mu$m $x_c$, mindestens 75 ppm pro $\mu$m $x_c$ betragen. Die Änderungsrate des relativen thermischen Längenänderungspotentials in Abhängigkeit von der charakteristischen Eindringtiefe $x_c$ kann beispielsweise höchstens 1000 ppm pro $\mu$m $x_c$, höchstens 700 ppm pro $\mu$m $x_c$, höchstens 500 ppm pro $\mu$m $x_c$, höchstens 400 ppm pro $\mu$m $x_c$, höchstens 350 ppm pro $\mu$m $x_c$, höchstens 300 ppm pro $\mu$m $x_c$, höchstens 250 ppm pro $\mu$m $x_c$, höchstens 200 ppm pro $\mu$m $x_c$, höchstens 150 ppm pro $\mu$m $x_c$, höchstens 100 ppm pro $\mu$m $x_c$ betragen.

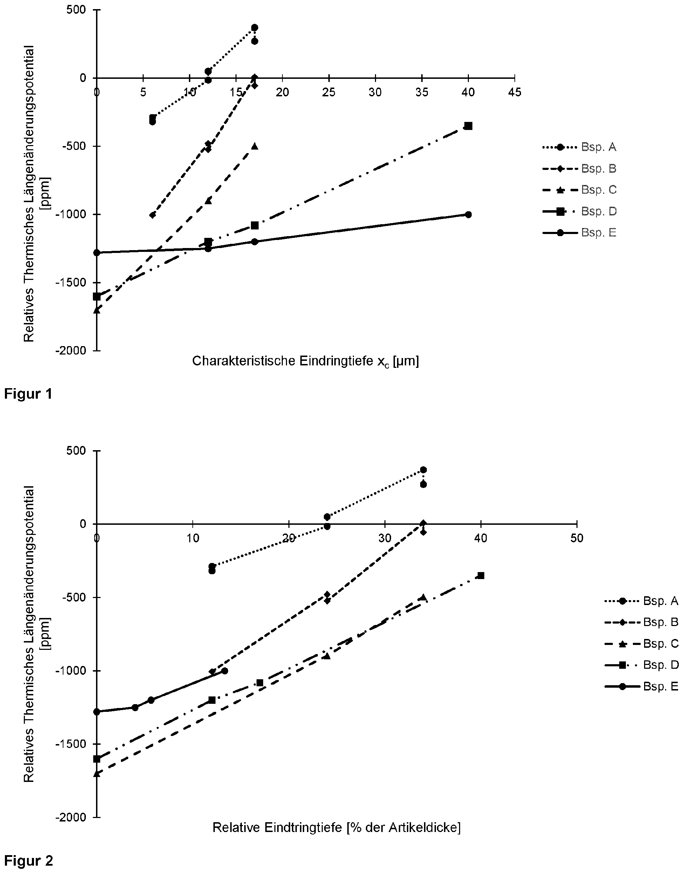

Wie in Figur 1 gezeigt, weist die Änderungsrate des relativen thermischen Längenänderungspotentials in Abhängigkeit von der charakteristischen Eindringtiefe $x_c$ eine große Abhängigkeit von der Artikeldicke auf. Je dünner der Glasartikel ist, desto größer ist die Änderungsrate des relativen thermischen Längenänderungspotentials. Daher kann die Änderungsrate des relativen thermischen Längenänderungspotentials in Abhängigkeit von der charakteristische Eindringtiefe $x_c$ auch bezogen auf eine bestimmte Referenzdicke eines Artikels angegeben werden, um einen Parameter zu erhalten, der einen größeren Rückschluss auf das Verhalten unabhängig von der geometrischen Ausgestaltung des Artikels im Hinblick auf die Artikeldicke erlaubt. Dass die Änderungsrate auf eine bestimmte Referenzdicke eines Artikels bezogen wird, bedeutet nicht, dass der entsprechende Artikel diese Dicke auch zwangsläufig aufweisen muss. Wie in Figur 1 gezeigt, weist der Kühlzustand zwar einen großen Einfluss auf das relative thermische Längenänderungspotential, jedoch lediglich einen untergeordneten Einfluss auf die Änderungsrate des relativen thermischen Längenänderungspotentials in Abhängigkeit von der charakteristischen Eindringtiefe $x_c$ auf. Daher ist es möglich die Änderungsrate des relativen thermischen Längenänderungspotentials in Abhängigkeit von der charakteristischen Eindringtiefe $x_c$ anzugeben, ohne den Kühlzustand berücksichtigen zu müssen. Bei einer Referenzdicke von 50 $\mu$m kann die Änderungsrate des relativen thermischen Längenänderungspotentials in Abhängigkeit von der charakteristischen Eindringtiefe $x_c$ beispielsweise in einem Bereich von 50 bis 100 ppm pro $\mu$m $x_c$ liegen.

Es ist auch möglich die Änderungsrate des relativen thermischen Längenänderungspotentials in Abhängigkeit von der relativen Eindringtiefe anzugeben (siehe Daten in Figur 2). Die relative Eindringtiefe ergibt sich aus dem Quotienten aus $x_c$ und Artikeldicke und wird als "% der Artikeldicke" angegeben. Im Vergleich zu Figur 1 ergibt sich bei der Darstellung der Figur 2 ein geringerer Unterschied der Steigungen der einzelnen Geraden bei verschiedenen Artikeldicken. Dies ist damit zu erklären, dass die relative Eindringtiefe eine Normierung der charakteristischen Eindringtiefe $x_c$ auf die Artikeldicke darstellt. Glasartikel der vorliegenden Erfindung können insbesondere eine Änderungsrate des relativen thermischen Längenänderungspotentials in Abhängigkeit von der relativen Eindringtiefe in einem Bereich von 20 ppm pro % der Artikeldicke bis 100 ppm pro % der Artikeldicke, beispielsweise von 25 ppm pro % der Artikeldicke bis 50 ppm pro % der Artikeldicke, oder von 30 ppm pro % der Artikeldicke bis 45 ppm pro % der Artikeldicke. Die Änderungsrate des relativen thermischen Längenänderungspotentials in Abhängigkeit von der relativen Eindringtiefe kann beispielsweise mindestens 20 ppm pro% der Artikeldicke, mindestens 25 ppm pro % der Artikeldicke oder mindestens 30 ppm pro % der Artikeldicke betragen. Die Änderungsrate des relativen thermischen Längenänderungspotentials in Abhängigkeit von der relativen Eindringtiefe kann beispielsweise höchstens 100 ppm pro % der Artikeldicke, höchstens 50 ppm pro % der Artikeldicke oder höchstens 45 ppm pro % der Artikeldicke betragen.

Um das relative thermische Längenänderungspotential nach chemischer Vorspannung auf eine Tiefe $x_c$ von 30% der Artikeldicke zu bestimmen, muss nicht zwangsläufig auf eine Tiefe $x_c$ von genau 30% der Artikeldicke vorgespannt werden. Es ist auch möglich, verschiedene Messwerte bei verschiedenen Vorspanntiefen zu bestimmen und das relative thermische Längenänderungspotential nach chemischer Vorspannung auf eine Tiefe $x_c$ von 30% der Artikeldicke durch Interpolation oder Extrapolation entsprechender Daten zu bestimmen, insbesondere durch lineare Interpolation oder lineare Extrapolation. Beispielsweise können verschiedene Referenzartikel auf verschiedene Tiefen in einem Bereich von 0% bis 40%, insbesondere von 10% bis 35% vorgespannt werden, um das relative thermische Längenänderungspotential bei Vorspannung auf eine bestimmte Tiefe $x_c$ innerhalb des Bereichs zu bestimmen. Aus entsprechenden Daten lässt sich dann das relative thermische Längenänderungspotential nach chemischer Vorspannung auf eine Tiefe $x_c$ von 30% der Artikeldicke durch Interpolation oder Extrapolation, insbesondere durch lineare Interpolation oder lineare Extrapolation bestimmen.

Um das relative thermische Längenänderungspotential zu bestimmen, werden Längen des Glasartikels vor und nach einer thermischen Behandlung bestimmt und miteinander verrechnet. Dies kann wie folgt erfolgen.

Die Längenbestimmung kann insbesondere optisch erfolgen. Die exakten Abmessungen der Probe vor und nach der thermischen Behandlung werden beispielsweise mit einer Koordinaten-Messmaschine, insbesondere vom Typ ZEISS O-Inspect optisch vermessen. Zur Verbesserung der Detektion der Kanten durch das Messsystem können die Kanten zuvor markiert werden, beispielsweise durch Aufbringen einer optisch detektierbaren Markierung. Insbesondere können die Kanten mit einem Stift, beispielsweise einem schwarzen Edding nachgezogen werden. So lässt sich umlaufend ein schwarzer Rand mit einer Breite von beispielsweise ca. 4 mm erzeugen. Dadurch kann die Detektion der Kanten erheblich verbessert werden.

Die Probengröße kann insbesondere 40 mm x 140 mm betragen.

Die Vermessung eines einzelnen Glasartikels erfolgt insbesondere in drei Schritten:

a) Bestimmung der Fokusebenen: Um bei der optischen Vermessung die richtige Fokusebene einstellen zu können, wird zunächst die Höhenposition der Probe vermessen. Hierzu kann der integrierte Weißlicht-Interferometrie-Sensor entlang dem Rand der Probe bewegt und leicht innerhalb der Kante an mehreren Positionen die z-Lage der Oberfläche bestimmt werden.

b) Bestimmung der Ausrichtung der Probe: Bevor die exakte Vermessung der Kante beginnt, kann mit geringer Vergrößerung die Ausrichtung der Probe überprüft werden. Hierfür kann das optische Messsystem über die (erwartete Position) einer der langen Kanten bewegt werden. Im Abstand von ca. 1 mm kann ein Bild aufgenommen werden. Durch die Schwärzung des Rands der Probe gibt es in diesem Bild an der Kante einen hohen Kontrast. Zur Bestimmung der Position der Kante kann die Maschine ein Linienprofil der Helligkeitswerte erstellen, das senkrecht zur "erwarteten" Ausrichtung der Kante verläuft. In diesem Profil wird der Punkt als Kante bewertet, bei dem der Helligkeitswert auf 50% des Werts im hellen Bereich abgefallen ist. Durch die Position des Linienprofils und dem "50%-Pixel" darauf, ist ein Punkt der Kante eindeutig definiert. Die Ausrichtung der Kante im Koordinatensystem der Maschine kann berechnet werden, indem durch die so gemessenen Punkte entlang der langen Kante eine Gerade gefittet wird. Diese Gerade definiert dann die Ausrichtung des Koordinatensystems der Probe.

c) Vermessung der Kanten: Nachdem das Koordinatensystem der Probe bekannt ist, kann die Maschine das optische Messsystem über die Kanten der Probe bewegen, wobei sie den nominalen Abmessungen folgt. Nun können mit großer Auflösung im Abstand von beispielsweise ca. 35 $\mu$m (kurze Kanten) bzw. beispielsweise 100 $\mu$m (lange Kanten) Punkte auf der Kante bestimmt werden - entsprechend der Beschreibung unter b). Durch die Messpunkte können Geraden gefittet werden. Die Schnittpunkte dieser Geraden definieren die Ecke der Probe. Mit Hilfe der so bestimmten Ecken der Proben lassen sich die Kantenlängen bestimmen.

Sowohl die Ausgangsgeometrie vor der thermischen Behandlung als auch die Endgeometrie nach der thermischen Behandlung können gemäß dem beschriebenen Verfahren erfolgen.

Die Temperaturbehandlung kann in einem Ofen erfolgen, insbesondere in einem Ofen vom Typ Nabertherm N20/HR. Der Ofen kann beispielsweise über einen Regler vom Typ EUROTHERM 2604 gesteuert werden. Die Proben werden bevorzugt bei Raumtemperatur auf eine ebene

Quarzalplatte aufgelegt und diese dann in den Ofen, der ebenfalls bei Raumtemperatur ist, gestellt. Über den Regler kann ein Temperaturprofil vorgegeben werden, dem der Ofen dann folgt.

Das Temperaturprofil setzt sich aus drei Elementen zusammen:

1) Aufheizung: Der Ofen kann bis zur Soll-Temperatur aufgeheizt werden, insbesondere mit einer Rate von 5K/min. Die Soll-Temperatur liegt bevorzugt 60 K unterhalb von Tg. Bei einem Glas mit einer Tg von etwa 620°C kann die Soll-Temperatur insbesondere etwa 560°C betragen. Bei Aufheizung von Raumtemperatur auf 560°C mit 5 K/min dauert es ca. 107 bis 108 Minuten bis die Soll-Temperatur erreicht ist (siehe auch Ofenkurve in Figur 3).

2) Haltezeit: In diesem Zeitraum wird die Temperatur im Ofen konstant bei der Soll-Temperatur gehalten. Die Haltezeit beträgt 24 Stunden. Ein Zeitraum von 24 Stunden hat sich als besonders geeigneter Zeitraum für die Bestimmung des relativen thermischen Längenänderungspotentials erwiesen. Nach Ablauf von 24 Stunden findet nur noch eine vernachlässigbare Änderung der fiktiven Temperatur statt.

3) Abkühlung: Um die Proben möglichst schnell abkühlen zu lassen, wird der Ofen bevorzugt beim Abkühlen nicht weiter beheizt. Er kann beim Abkühlen damit seinem charakteristischen Zeitverlauf folgen. In Figur 3 ist ein entsprechender charakteristischer Zeitverlauf beispielhaft gezeigt. Eine aktive Kühlung wird in der Regel nicht vorgenommen. Bevorzugt wird jedoch sichergestellt, dass eine Temperatur von 100 K unterhalb der Soll-Temperatur spätestens 125 Minuten nach Beendigung der Haltezeit erreicht wird. Eine Temperatur von 200 K unterhalb der Soll-Temperatur wird bevorzugt spätestens 200 Minuten nach Erreichen der Temperatur von 100 K unterhalb der Soll-Temperatur erreicht. Eine Temperatur von 200°C sollte bevorzugt spätestens 30 Stunden nach Beendigung der Haltezeit erreicht werden. Diese Werte werden von üblichen Öfen ohne aktive Kühlung erreicht. Falls besonders isolierende Öfen verwendet werden, kann eine aktive Kühlung vorgesehen werden, um das beschriebene bevorzugte Abkühlverhalten zu erreichen. Der Ofen wird bevorzugt frühestens geöffnet, nachdem die Temperatur im Ofeninneren unter 100°C gefallen ist. Bei üblichen Öfen ist mit einem Zeitraum von 15 bis 20 Stunden zu rechnen, bis die Ofentemperatur unter 100°C gefallen ist. Während des Abkühlens kommt es zu keiner nennenswerten Änderung der fiktiven Temperatur mehr (Figur 3), so dass es auf den genauen Zeitverlauf nicht ankommt.

Die beschriebenen Messungen der Ausgangs- und Endgeometrie liefern (über die gemessenen Ecken der Proben) die vier Kantenlängen vor und nach der Temperung. Daraus kann für jede Kante ein separates relatives thermisches Längenänderungspotential$_i$ gemäß der folgenden Formel bestimmt werden.

$$Relatives\ Thermisches\ L\ddot{a}ngen\ddot{a}nderungspotential_i = \frac{L_{i,nach} - L_{i,vor}}{L_{i,vor}}$$

Die Variable i ist eine Laufvariable, die bei viereckigen, insbesondere quadratischen oder rechteckigen Proben von 1 bis 4 geht und mit der die einzelnen Kanten indiziert werden. $L_{i,vor}$ ist die Länge der i-ten Kante vor der thermischen Behandlung und $L_{i,nach}$ ist die Länge der i-ten Kante nach der thermischen Behandlung.
Aus diesen vier Einzelwerten relatives thermisches Längenänderungspotential$_1$, relatives thermisches Längenänderungspotential$_2$, relatives thermisches Längenänderungspotential$_3$, und relatives thermisches Längenänderungspotential$_4$ kann der Mittelwert gemäß der folgenden Formel berechnet werden.

$$Relatives\ Thermisches\ L\ddot{a}ngen\ddot{a}nderungspotential = \frac{1}{4} \cdot \sum_{i=1}^{4} Relatives\ Thermisches\ L\ddot{a}ngen\ddot{a}nderungspotential_i$$

Dieser Mittelwert ist das relative thermische Längenänderungspotential des Glasartikels.
Das relative thermische Längenänderungspotential lässt sich in entsprechender Art und Weise auch für andere Geometrien bestimmen. Bei dreieckigen Proben beispielsweise geht die Variable i entsprechend von 1 bis 3. Bei runden Geometrien kann ohne weiteres ein geeigneter linearer Dimensionsparameter zur Vermessung gewählt werden, beispielsweise der Durchmesser oder der Umfang.
In einem Aspekt der Erfindung können gleichzeitig mehrere Scheiben vermessen werden. Dies lässt sich beispielsweise mit Hilfe eines "Ausrichtbretts" bewerkstelligen, auf dem mehrere Glasartikel, beispielsweise bis zu 27 Scheiben sauber ausgerichtet werden können, insbesondere durch das Anlegen an Anschlagstifte. Durch ein Messprogramm, das die Position der einzelnen Scheiben auf dem Ausrichtbrett kennt, kann die geometrische Vermessung der Proben automatisch ablaufen.
Der erfindungsgemäße Glasartikel hat eine Dicke von weniger als 100 μm. Die Dicke des Glasartikels kann beispielsweise mindestens 15 μm, mindestens 17,5 μm, mindestens 20 μm, mindestens 22,5 μm, mindestens 25 μm oder mindestens 30 μm betragen. Die Dicke des Glasartikels kann beispielsweise höchstens 90 μm, höchstens 80 μm, höchstens 70 μm, höchstens 60 μm, höchstens 55 μm oder höchstens 50 μm betragen. Die Dicke des Glasartikels kann insbesondere in einem Bereich von 15 $\mu$m bis 90 $\mu$m, von 17,5 $\mu$m bis 80 $\mu$m, von 20 $\mu$m bis 70 $\mu$m, von 22,5 $\mu$m bis 60 $\mu$m, von 25 $\mu$m bis 55 $\mu$m oder von 30 $\mu$m bis 50 $\mu$m liegen.

Der Glasartikel kann mindestens eine feuerpolierte Oberfläche aufweisen, beispielsweise genau eine feuerpolierte Oberfläche oder genau zwei feuerpolierte Oberflächen. Feuerpolierte Oberflächen können sich insbesondere aus den Herstellungsverfahren ergeben, mit denen die Glasartikel erhalten werden können. Bevorzugte Herstellungsverfahren sind beispielsweise Downdraw und Overflow-Fusion. Mit diesen können insbesondere zwei feuerpolierte Oberflächen erhalten werden.

Feuerpolierte Oberflächen sind sehr glatt, d.h. sie weisen nur geringe Rauheit auf. Im Gegensatz zum mechanischen Polieren wird eine Oberfläche beim Feuerpolieren nicht abgeschliffen, sondern das zu polierende Material wird so hoch erhitzt, dass es glattfließt. Daher sind die Kosten für die Herstellung einer glatten Oberfläche durch Feuerpolieren wesentlich geringer als für die Herstellung einer sehr glatten mechanisch polierten Oberfläche.

Mit "Oberflächen" sind bezogen auf die erfindungsgemäßen Glasartikel die Ober- und/oder Unterseite gemeint, also die beiden Flächen, welche im Vergleich zu den übrigen Flächen die größten sind.

Feuerpolierte Oberflächen zeichnen sich durch eine besonders geringe Rauheit aus. Die Rauheit einer feuerpolierten Oberfläche ist geringer als die einer mechanisch polierten Oberfläche.

Die feuerpolierte/n Oberfläche/n der Glasartikel dieser Erfindung weisen vorzugsweise eine quadratische Rauheit ($R_q$ oder auch RMS) von höchstens 5 nm, bevorzugt höchstens 3 nm und besonders bevorzugt höchstens 1 nm auf. Die Rautiefe Rt beträgt für die Dünngläser vorzugsweise höchstens 6 nm, weiter bevorzugt höchstens 4 nm und besonders bevorzugt höchstens 2 nm. Die Rautiefe wird gemäß DIN EN ISO 4287 bestimmt.

Bei mechanisch polierten Oberflächen sind die Rauheitswerte schlechter. Außerdem sind bei mechanisch polierten Oberflächen Polierspuren unter dem Rasterkraftmikroskop (AFM) erkennbar. Des Weiteren können ebenfalls unter dem AFM Reste des mechanischen Poliermittels, wie Diamantpulver, Eisenoxid und/oder $CeO_2$, erkannt werden. Da mechanisch polierte Oberflächen nach dem Polieren stets gereinigt werden müssen, kommt es zu Auslaugung bestimmter Ionen an der Oberfläche des Glases. Diese Verarmung an bestimmten Ionen kann mit Sekundärionenmassenspektrometrie (ToF-SIMS) nachgewiesen werden. Solche Ionen sind beispielsweise Ca, Zn, Ba und Alkalimetalle.

In einem Aspekt der Erfindung kann der vorspannbare Glasartikel ein Glas umfassen oder aus einem Glas bestehen, das ausgewählt ist aus der Gruppe bestehend aus Aluminosilikatglas, Boroaluminosilikatglas, Silikatglas und Borosilikatglas. Aluminosilikatglas und Boroaluminosilikatglas sind besonders bevorzugt. Aluminosilikatglas ist ganz besonders bevorzugt.

In einer Ausführungsform weist das Glas $SiO_2$ in einem Anteil von wenigstens 40 Gew.-% und/oder von maximal 75 Gew.-% auf. $SiO_2$ trägt zu den gewünschten Viskositätseigenschaften und zur hydrolytischen Beständigkeit bei. Der Anteil an $Al_2O_3$ kann vorzugsweise wenigstens 10 Gew.-% und/oder höchstens 30 Gew.-% betragen. Ein gewisser Anteil an $Al_2O_3$ ermöglicht die gewünschte chemische Vorspannbarkeit. Um eine ausreichende chemische Vorspannbarkeit sicherzustellen, ist es bevorzugt, wenn das Alumosilikatglas wenigstens 9 Gew.-% $Na_2O$ enthält. Der Gehalt von $Na_2O$ kann auf bis zu 18 Gew.-% oder bis zu 16 Gew.-% begrenzt werden.

In einer Ausführungsform enthält das Glas kein $B_2O_3$ oder nur wenig $B_2O_3$. $B_2O_3$ hat zwar positiven Einfluss auf die hydrolytische Beständigkeit. Es wirkt sich aber negativ auf die chemische Vorspannbarkeit aus. Daher ist sein Gehalt vorzugsweise auf maximal 20 Gew.-%, maximal 10 Gew.-%, maximal 5 Gew.-% oder maximal 2 Gew.-% beschränkt.

In einer Ausführungsform enthält das Glas weniger als 1 Gew.-% $Li_2O$, beispielsweise weniger als 0,5 Gew.-%, weniger als 0,2 Gew.-%, oder weniger als 0,1 Gew.-%. Das Glas kann beispielsweise weniger als 1 Mol-% $Li_2O$ enthalten, insbesondere weniger als 0,5 Mol-%, weniger als 0,2 Mol-%, oder weniger als 0,1 Mol-%. Bevorzugt ist das Glas sogar frei von $Li_2O$.

Wenn es in dieser Beschreibung heißt, die Gläser seien frei von einer Komponente oder enthielten eine gewisse Komponente nicht, so ist damit gemeint, dass diese Komponente allenfalls als Verunreinigung in den Gläsern vorliegen darf. Das bedeutet, dass sie nicht in wesentlichen Mengen zugesetzt wird. Nicht wesentliche Mengen sind erfindungsgemäß Mengen von weniger als 500 ppm, bevorzugt weniger als 300 ppm, bevorzugt weniger als 100 ppm, besonders bevorzugt weniger als 50 ppm und am meisten bevorzugt weniger als 10 ppm, jeweils auf Gewichtsbasis oder Stoffmengenbasis.

Ein bevorzugtes alkalimetalloxidhaltiges Alumosilikatglas weist die folgenden Bestandteile auf:

| | (Gew.-%) |
|---|---|
| $SiO_2$ | 40-75 |
| $Al_2O_3$ | 10-30 |
| $B_2O_3$ | 0-20 |

(fortgesetzt)

|  | (Gew.-%) |
|---|---|
| $Na_2O + K_2O$ | >0-30 |
| $MgO + CaO + SrO + BaO + ZnO$ | 0-25 |
| $TiO_2 + ZrO_2$ | 0-15 |
| $P_2O_5$ | 0-10 |

Die vorliegende Erfindung betrifft auch ein Verfahren zur Herstellung eines vorspannbaren Glasartikels der Erfindung. Das Verfahren umfasst insbesondere den folgenden Schritt:

a) Bereitstellen eines Glasartikels in einem Ziehverfahren.

Das Ziehverfahren ist bevorzugt ausgewählt aus der Gruppe bestehend aus Downdraw, Overflow-Fusion und Wiederziehen. Besonders bevorzugt ist das Ziehverfahren Downdraw oder Overflow-Fusion.

Die Ziehgeschwindigkeit kann beispielsweise mindestens 10 m/min und/oder höchstens 40 m/min betragen. Durch eine gezielte Einstellung der Ziehgeschwindigkeit kann der Kühlzustand des Glasartikels beeinflusst werden. Der Kühlzustand wiederum beeinflusst das relative thermische Längenänderungspotential des Glasartikels. Die Einstellung des Kühlzustands muss allerdings nicht zwangsläufig allein über die Einstellung der Ziehgeschwindigkeit erfolgen. Wenn beispielsweise mit einer besonders hohen Ziehgeschwindigkeit gezogen wurde, so dass der Kühlzustand des Glasartikels derart ist, dass das relative thermische Längenänderungspotential nach chemischem Vorspannen auf eine Tiefe $x_c$ von 30% der Artikeldicke weit im negativen Bereich liegt, kann das relative thermische Längenänderungspotential mit einer Temperung hin zu weniger negativen Werten verschoben werden. Eine solche Temperung kann beispielsweise vor oder nach dem chemischen Vorspannen vorgenommen werden. Eine zu geringe Ziehgeschwindigkeit sollte allerdings vermieden werden, da sich das relative thermische Längenänderungspotential durch eine Temperung stets nur zu weniger negativen oder positiveren Werten hin verschieben lässt. Wenn also die Ziehgeschwindigkeit derart langsam gewählt wurde, dass sich nach dem chemischen Vorspannen auf eine Tiefe $x_c$ von 30% der Artikeldicke ein relatives thermisches Längenänderungspotential mit positivem Vorzeichen ergibt, gibt es keine Möglichkeit der Verschiebung des relativen thermischen Längenänderungspotentials in den negativen Wertebereich.

Zu beachten ist außerdem, dass das relative thermische Längenänderungspotential auch von der Glaszusammensetzung beeinflusst wird. Eine für eine Glaszusammensetzung optimierte Ziehgeschwindigkeit kann daher in der Regel nicht eins zu eins auf eine andere Glaszusammensetzung übertragen werden. Die Optimierung der Ziehgeschwindigkeit erreicht der Fachmann jedoch leicht über Routineversuche, indem verschiedene Ziehgeschwindigkeiten getestet und jeweils das relative thermische Längenänderungspotential nach chemischer Vorspannung auf eine Tiefe $x_c$ von 30% der Artikeldicke bestimmt wird.

Bevorzugte Ausführungsformen

In einer Ausführungsform betrifft die Erfindung einen vorspannbarer Glasartikel mit einer Dicke von 15 $\mu$m bis 70 $\mu$m und einem Kühlzustand, der derart ist, dass der Glasartikel nach chemischer Vorspannung auf eine Tiefe $x_c$ von 30% der Artikeldicke ein relatives thermisches Längenänderungspotential in einem Bereich von -1500 ppm bis $\leq 0$ ppm aufweist, wobei der Glasartikel mindestens eine feuerpolierte Oberfläche aufweist.

In einer Ausführungsform betrifft die Erfindung einen vorspannbaren Glasartikel mit einer Änderungsrate des relativen thermischen Längenänderungspotentials in Abhängigkeit von der charakteristischen Eindringtiefe $x_c$ in einem Bereich von 30 ppm pro $\mu$m $x_c$ bis 1000 ppm pro $\mu$m $x_c$ liegt und einem Grenzwert des Diffusionsvermögens D von mindestens 10 $\mu$m$^2$ pro Stunde, wobei das Glas ausgewählt ist aus der Gruppe bestehend aus Aluminosilikatglas, Boroaluminosilikatglas, Silikatglas und Borosilikatglas und wobei das Glas $Na_2O$ in einem Anteil von mindestens 9 Gew.-% umfasst.

In einer Ausführungsform betrifft die Erfindung einen vorspannbarer Glasartikel mit einer Dicke von weniger als 100 $\mu$m und einem Kühlzustand, der derart ist, dass der Glasartikel nach chemischer Vorspannung auf eine Tiefe $x_c$ von 30% der Artikeldicke ein relatives thermisches Längenänderungspotential in einem Bereich von -1500 ppm bis $\leq 0$ ppm aufweist, wobei der Grenzwert des Diffusionsvermögens D mindestens 10 $\mu$m$^2$ pro Stunde beträgt, wobei das Glas ausgewählt ist aus der Gruppe bestehend aus Aluminosilikatglas, Boroaluminosilikatglas, Silikatglas und Borosilikatglas und wobei das Glas $Na_2O$ in einem Anteil von mindestens 9 Gew.-% umfasst.

In einer Ausführungsform betrifft die Erfindung einen vorspannbaren Glasartikel mit einer Änderungsrate des relativen thermischen Längenänderungspotentials in Abhängigkeit von der charakteristischen Eindringtiefe $x_c$ in einem Bereich von 30 ppm pro $\mu$m $x_c$ bis 1000 ppm pro $\mu$m $x_c$ liegt, wobei der Glasartikel mindestens eine feuerpolierte Oberfläche aufweist.

In einer Ausführungsform betrifft die Erfindung einen vorspannbarer Glasartikel mit einer Dicke von weniger als 100 $\mu$m und einem Kühlzustand, der derart ist, dass der Glasartikel nach chemischer Vorspannung auf eine Tiefe $x_c$ von 30% der Artikeldicke ein relatives thermisches Längenänderungspotential in einem Bereich von -1500 ppm bis $\leq$ 0 ppm aufweist, wobei das Glas ein Aluminosilikatglas ist und die Änderungsrate des relativen thermischen Längenänderungspotentials in Abhängigkeit von der charakteristischen Eindringtiefe $x_c$ in einem Bereich von 30 ppm pro $\mu$m $x_c$ bis 1000 ppm pro $\mu$m $x_c$ liegt.

## Beispiele

### 1. Relatives Thermisches Längenänderungspotential

Rechteckige Aluminosilikatglasartikel wurden in einem Downdraw-Verfahren hergestellt. Im Anschluss wurden die Gläser chemisch vorgespannt. Im Anschluss an das chemische Vorspannen wurde das relative thermische Längenänderungspotential bei einer Tiefe $x_c$ von 30% der Artikeldicke wie folgt bestimmt.

Um das relative thermische Längenänderungspotential zu bestimmen, müssen Längen des Glasartikels vor und nach einer thermischen Behandlung bestimmt und miteinander verrechnet werden. Verwendet wurden Glasartikel mit den nominellen Maßen 140 mm x 40 mm. Solche Glasartikel weisen vier Längen auf, zwei Längen mit dem nominellen Maß 140 mm und zwei Längen mit dem nominellen Maß 40 mm. Die Messung kann analog mit Proben anderer Abmessungen durchgeführt werden.

Die exakten Abmessungen vor und nach der thermischen Behandlung wurden mit einer Koordinaten-Messmaschine vom Typ ZEISS O-Inspect optisch vermessen. Da die Kanten vom optischen Messsystem der Anlage nur schwer detektiert werden können, wurden die Kanten mit einem schwarzen Edding nachgezogen. Vor der Messung hatte die Scheibe also umlaufend einen schwarzen Rand mit einer Breite von ca. 4 mm.

Es wurden gleichzeitig mehrere Scheiben vermessen. Aus diesem Grund wurde ein "Ausrichtbrett" hergestellt. Auf diesem können bis zu 27 Scheiben durch das Anlegen an Anschlagstifte sauber ausgerichtet werden. Durch ein Messprogramm, das die Position der einzelnen Scheiben auf dem Ausrichtbrett kennt, kann dann die geometrische Vermessung der bis zu 27 Scheiben automatisch ablaufen.

Die Vermessung einer einzelnen Scheibe erfolgte in drei Schritten:

a) Bestimmung der Fokusebenen: Um bei der optischen Vermessung die richtige Fokusebene einstellen zu können, wird zunächst die Höhenposition der Probe vermessen. Hierzu wird der integrierte Weißlicht-Interferometrie-Sensor entlang dem Rand der Probe bewegt und leicht innerhalb der Kante an mehreren Positionen die z-Lage der Oberfläche bestimmt.

b) Bestimmung der Ausrichtung der Probe: Bevor die exakte Vermessung der Kante beginnt, wird mit geringer Vergrößerung die Ausrichtung der Probe überprüft. Hierfür wird das optische Messsystem über die (erwartete Position) einer der langen Kanten bewegt. Im Abstand von ca. 1 mm wird ein Bild aufgenommen. Durch die Schwärzung des Rands der Probe gibt es in diesem Bild an der Kante einen hohen Kontrast. Zur Bestimmung der Position der Kante erstellt die Maschine ein Linienprofil der Helligkeitswerte, das senkrecht zur "erwarteten" Ausrichtung der Kante verläuft. In diesem Profil wird der Punkt als Kante bewertet, bei dem der Helligkeitswert auf 50% des Werts im hellen Bereich abgefallen ist. Durch die Position des Linienprofils und dem "50%-Pixel" darauf, ist ein Punkt der Kante eindeutig definiert. Die Ausrichtung der Kante im Koordinatensystem der Maschine wird nun berechnet, indem durch die so gemessenen Punkte entlang der langen Kante eine Gerade gefittet wird. Diese Gerade definiert dann die Ausrichtung des Koordinatensystems der Probe.

c) Vermessung der Kanten: Nachdem das Koordinatensystem der Probe bekannt ist, bewegt die Maschine das optische Messsystem über die Kanten der Probe, wobei sie den nominalen Abmessungen folgt. Nun werden mit großer Auflösung im Abstand von ca. 35 $\mu$m (kurze Kanten) bzw. 100 $\mu$m (lange Kanten) Punkte auf der Kante bestimmt - entsprechend der Beschreibung unter b) Durch die ca. 1500 Messpunkte pro Kante werden Geraden gefittet. Die Schnittpunkte dieser Geraden definieren die Ecke der Probe. Mit Hilfe der so bestimmten vier Ecken der Proben lassen sich die vier Kantenlängen bestimmen. Die Messgenauigkeit der Maschine liegt bei < 4 $\mu$m. Bei einer Kantenlänge von 140 mm entspricht das in etwa 28 ppm. Bei größeren Probenlängen wird die Messung der relativen Längenänderung noch genauer.

Sowohl die Ausgangsgeometrie vor der thermischen Behandlung als auch die Endgeometrie nach der thermischen Behandlung erfolgten gemäß dem beschriebenen Verfahren.

Die Temperaturbehandlung erfolgte in einem Ofen vom Typ Nabertherm N20/HR, der über einen Regler vom Typ EUROTHERM 2604 gesteuert wird. Die Proben werden bei Raumtemperatur auf eine ebene Quarzalplatte aufgelegt und diese dann in den Ofen, der ebenfalls bei Raumtemperatur ist, gestellt. Über den Regler wird ein Temperaturprofil vorgegeben, dem der Ofen dann folgt.

Das Temperaturprofil setzt sich aus drei Elementen zusammen:

1) Aufheizung: Der Ofen wird mit einer Rate von 5K/min bis zur Soll-Temperatur aufgeheizt. Die Soll-Temperatur lag bei 560°C. Dies entspricht bei dem verwendeten Glas einer Temperatur von 60 K unterhalb von Tg. Da die Parameter des Reglers auf den Ofen eingestellt sind, kann das leichte Überschwingen beim Übergang von Aufheizung zur konstanten Temperatur vernachlässigt werden.

2) Haltezeit: In diesem Zeitraum wird die Temperatur im Ofen konstant gehalten. Die Haltezeit betrug 24 Stunden.

3) Abkühlung: Um die Proben möglichst schnell abkühlen zu lassen, wird der Ofen beim Abkühlen nicht weiter beheizt. Er folgt beim Abkühlen damit seinem charakteristischen Zeitverlauf. Der Ofen wird frühestens geöffnet, nachdem die Temperatur im Ofeninneren unter 100°C gefallen ist. Bei dem verwendeten Ofen war dies etwa 16 bis 17 Stunden nach Stopp der Beheizung der Fall (siehe Ofenkurve in Figur3).

Die beschriebenen Messungen der Ausgangs- und Endgeometrie liefern (über die gemessenen Ecken der Proben) die vier Kantenlängen vor und nach der Temperung. Daraus wurde für jede Kante ein separates relatives thermisches Längenänderungspotential$_i$ gemäß der folgenden Formel bestimmt.

$$Relatives\ Thermisches\ L\ddot{a}ngen\ddot{a}nderungspotential_i = \frac{L_{i,nach} - L_{i,vor}}{L_{i,vor}}$$

Die Variabel i ist eine Laufvariable, die von 1 bis 4 geht und mit der die einzelnen Kanten indiziert werden. $L_{i,vor}$ ist die Länge der i-ten Kante vor der thermischen Behandlung und $L_{i,nach}$ ist die Länge der i-ten Kante nach der thermischen Behandlung.

Aus diesen vier Einzelwerten relatives thermisches Längenänderungspotential$_1$, relatives thermisches Längenänderungspotential$_2$, relatives thermisches Längenänderungspotential$_3$, und relatives thermisches Längenänderungspotential$_4$ wurde der Mittelwert gemäß der folgenden Formel berechnet.

$$Relatives\ Thermisches\ L\ddot{a}ngen\ddot{a}nderungspotential = \frac{1}{4} \cdot \sum_{i=1}^{4} Relatives\ Thermisches\ L\ddot{a}ngen\ddot{a}nderungspotential_i$$

Dieser Mittelwert ist das relative thermische Längenänderungspotential des Glasartikels.

Die Ergebnisse sind in folgender Tabelle zusammengefasst.

|  | Bsp. 1 | Bsp. 2 | Bsp. 3 | Bsp. 4 | Bsp. 5 |
|---|---|---|---|---|---|
| **Relatives Thermisches Längenänderungspotential** | -964 ppm | -810 ppm | -700 ppm | -200 ppm | +200 ppm |

Sämtliche Beispiele hatten eine Dicke von 50 μm. Der Unterschied zwischen den Beispielen bestand lediglich in der aus den fiktiven Temperaturen hergeleiteten Ziehgeschwindigkeit.

Bei gleichem Durchsatz kann über die Ziehrate die Dicke eingestellt werden. Der Durchsatz ist proportional zum Produkt aus Ziehrate und Dicke. Bei konstantem Durchsatz ist also beispielsweise eine Verdopplung der Ziehrate mit einer Halbierung der Glasdicke verbunden. Um bei verschiedenen Ziehraten Glasartikel mit derselben Dicke zu erhalten, muss dementsprechend der Durchsatz angepasst werden. Eine konstante Dicke wird beispielsweise erreicht, wenn bei einer Verdopplung der Ziehrate auch der Durchsatz verdoppelt wird. Ebenso ist bei einer Halbierung der Ziehrate der Durchsatz zu halbieren, wenn die Glasdicke konstant gehalten werden soll.

Eine langsamere Ziehrate kann auch nachträglich simuliert werden, indem eine Probe nach der Herstellung einer Temperung unterzogen wird, die zu einer Absenkung der fiktiven Temperatur führt. In diesem Fall wird auf die aus den fiktiven Temperaturen hergeleitete äquivalente Ziehrate verwiesen.

Die aus den fiktiven Temperaturen hergeleitete äquivalente Ziehrate war bei Beispiel 1 am höchsten, bei Beispiel 2 am zweithöchsten, bei Beispiel 3 am dritthöchsten, bei Beispiel 4 am vierthöchsten und bei Beispiel 5 am geringsten.

Die Ziehrate des Beispiels 5 war so langsam, dass sich nach beidseitiger chemischer Vorspannung auf eine Tiefe von jeweils 30% der Artikeldicke ein relatives thermisches Längenänderungspotential mit positivem Vorzeichen ergab. Das Beispiel 5 ist also ein nicht-erfindungsgemäßes Vergleichsbeispiel.

### 2. Abhängigkeit des relativen thermischen Längenänderungspotentials von der Vorspanntiefe

Rechteckige Aluminosilikatglasartikel wurden in einem Downdraw-Verfahren hergestellt. Im Anschluss wurden die Gläser chemisch vorgespannt. Im Anschluss an das chemische Vorspannen wurde das relative thermische Längenänderungspotential bei verschiedenen Tiefen $x_c$ bestimmt. Die Bestimmung erfolgte wie oben im ersten Beispielteil beschrieben. Die Ergebnisse sind in den Figuren 1 und 2 gezeigt.

Es wurden fünf Beispiele A bis E der gleichen Glaszusammensetzung getestet. Die Beispiele A bis C wiesen allesamt jeweils eine Dicke von 50 $\mu$m auf und unterschieden sich lediglich hinsichtlich der aus den fiktiven Temperaturen hergeleiteten äquivalenten Ziehgeschwindigkeit. Die Ziehrate war bei Beispiel C am höchsten, bei Beispiel B am zweithöchsten und bei Beispiel A am geringsten. Die Beispiele D und E wiesen größere Dicken auf, nämlich 100 $\mu$m bei Beispiel D und 300 $\mu$m bei Beispiel E.

Es wurde gefunden, dass die Änderungsrate des relativen thermischen Längenänderungspotentials in Abhängigkeit von der charakteristischen Eindringtiefe $x_c$ mit der Dicke des Glasartikels variiert. Je dünner der Glasartikel ist, desto größer ist die Änderungsrate des relativen thermischen Längenänderungspotentials. Das Problem, dass das relative thermische Längenänderungspotential durch das chemische Vorspannen in den positiven Wertebereich verschoben wird, ergibt sich daher insbesondere bei dünnen Gläsern.

Ein Vergleich der Beispiel A bis C zeigt zudem, dass sich ein positives relatives thermisches Längenänderungspotential nach dem chemischen Vorspannen insbesondere dann ergeben kann, wenn ein Glasartikel, beispielsweise aufgrund einer langsamen Ziehrate, ohnehin bereits weniger negative Werte des relativen thermischen Längenänderungspotentials aufweist.

Die Änderungsrate des relativen thermischen Längenänderungspotentials in Abhängigkeit von der charakteristischen Eindringtiefe $x_c$ kann in ppm/$\mu$m ausgedrückt werden. Figur 1 zeigt einen linearen Zusammenhang zwischen dem relativen thermischen Längenänderungspotential und der charakteristischen Eindringtiefe $x_c$. Die Änderungsrate des relativen thermischen Längenänderungspotentials in Abhängigkeit von der charakteristischen Eindringtiefe $x_c$ lässt sich somit leicht als Steigung der in Figur 1 dargestellten Daten bestimmen. Figur 2 zeigt dieselben Daten nach Normierung der charakteristischen Eindringtiefe $x_c$ auf die jeweilige Artikeldicke (relative Eindringtiefe). Die relative Eindringtiefe wird durch Division der charakteristischen Eindringtiefe $x_c$ durch die Artikeldicke berechnet und ist in Figur 2 als Prozentwert angegeben. Eine charakteristische Eindringtiefe $x_c$ von 40 $\mu$m ergibt bei einer Artikeldicke von 100 $\mu$m beispielsweise eine relative Eindringtiefe von 40%.

### 3. Reduktion der fiktiven Temperatur durch Temperung

Ein Aluminosilikatglasartikel mit einer fiktiven Temperatur von etwa 750°C wurde der unter "1. Relatives Thermisches Längenänderungspotential" beschriebenen Temperung unterzogen. Dadurch wurde die fiktive Temperatur von etwa 750°C auf weniger als 600°C reduziert (Figur 3).

### <u>Beschreibung der Figuren</u>

Figur 1 zeigt das relative thermische Längenänderungspotential (y-Achse) verschiedener Glasartikel in Abhängigkeit von der charakteristischen Eindringtiefe $x_c$ (x-Achse). Gezeigt sind fünf Beispiele A bis E der gleichen Glaszusammensetzung. Die Beispiele A bis C wiesen jeweils eine Dicke von 50 $\mu$m auf und unterschieden sich lediglich hinsichtlich der ihnen entsprechenden Ziehgeschwindigkeiten. Die entsprechende Ziehrate war bei Beispiel C am höchsten, bei Beispiel B am zweithöchsten und bei Beispiel A am geringsten. Die Beispiele D und E wiesen größere Dicken auf, nämlich 100 $\mu$m bei Beispiel D und 300 $\mu$m bei Beispiel E.

Figur 2 zeigt das relative thermische Längenänderungspotential (y-Achse) der Glasartikel A bis E in Abhängigkeit von der relativen Eindringtiefe (x-Achse). Die relative Eindringtiefe wird als Quotient aus charakteristischen Eindringtiefe $x_c$ und Artikeldicke berechnet und als "% der Artikeldicke" angegeben.

Figur 3 zeigt den Temperaturverlauf des Ofens (durchgezogene Linie) und den Verlauf der fiktiven Temperatur (gestrichelte Linie) eines mit dem entsprechenden Temperaturverlauf getemperten Glasartikels. Die y-Achse zeigt die Temperatur in °C, wobei sowohl die Ofentemperatur als auch die fiktive Temperatur des Glasartikels abgelesen werden können. Die x-Achse zeigt die Zeit in Stunden (h).

Figur 4 zeigt beispielhaft den durch einen Austauschprozess bedingten Verlauf der Konzentration eines Ions $Ion_E$, dessen Anteil in der Austauschschicht im Vergleich zur Bulkglasschicht erhöht ist (beispielsweise $K^+$). Auf der y-Achse ist die Ionenkonzentration und auf der x-Achse die relative Glastiefenposition angegeben. Eine relative Glastiefenposition von 0 entspricht der Oberfläche des Glases. Dort ist die Konzentration des Ions am höchsten (hier als 100% dargestellt). Die x-Position gibt den Abstand von der Glasoberfläche an. Es ist ersichtlich, dass die Konzentration des Ions von der Oberfläche zum Inneren des Glases hin, einer komplementären Fehlerfunktion (erfc) folgend, absinkt. Die Glastiefenposition ist relativ zu $x_c$ angegeben. Bei einer Tiefe von $x = x_c$ beträgt der über den Grundanteil hinausgehende Anteil der Ionen mit in der Austauschschicht im Vergleich zur Bulkschicht erhöhten Anteilen etwa 15,7% des an der Glasoberfläche befindlichen maximalen Überschussanteils.

**Patentansprüche**

1. Vorspannbarer Glasartikel mit einer Dicke von weniger als 100 $\mu$m und einem Kühlzustand, der derart ist, dass der Glasartikel nach chemischer Vorspannung auf eine Tiefe $x_c$ von 30% der Artikeldicke ein relatives thermisches Längenänderungspotential in einem Bereich von -1500 ppm bis $\leq$ 0 ppm aufweist.

2. Vorspannbarer Glasartikel nach Anspruch 1 mit einer Dicke in einem Bereich von 15 $\mu$m bis 70 $\mu$m.

3. Vorspannbarer Glasartikel nach mindestens einem der vorhergehenden Ansprüche, wobei der Glasartikel mindestens eine feuerpolierte Oberfläche aufweist.

4. Vorspannbarer Glasartikel nach mindestens einem der vorhergehenden Ansprüche mit einer Oberflächenrauheit RMS von höchstens 5 nm.

5. Vorspannbarer Glasartikel nach mindestens einem der vorhergehenden Ansprüche, wobei der Glasartikel nicht vorgespannt ist.

6. Vorspannbarer Glasartikel nach mindestens einem der vorhergehenden Ansprüche mit einem Grenzwert des Diffusionsvermögens von mindestens 10 $\mu$m$^2$ pro Stunde.

7. Vorspannbarer Glasartikel nach mindestens einem der vorhergehenden Ansprüche, wobei das Glas ausgewählt ist aus der Gruppe bestehend aus Aluminosilikatglas, Boroaluminosilikatglas, Silikatglas und Borosilikatglas und wobei das Glas $Na_2O$ in einem Anteil von mindestens 9 Gew.-% umfasst.

8. Vorspannbarer Glasartikel nach mindestens einem der vorhergehenden Ansprüche, wobei die Änderungsrate des relativen thermischen Längenänderungspotentials in Abhängigkeit von der charakteristischen Eindringtiefe $x_c$ in einem Bereich von 30 ppm pro $\mu$m $x_c$ bis 1000 ppm pro $\mu$m $x_c$ liegt.

9. Vorspannbarer Glasartikel nach mindestens einem der vorhergehenden Ansprüche, wobei die Änderungsrate des relativen thermischen Längenänderungspotentials in Abhängigkeit von der relativen Eindringtiefe in einem Bereich von 20 ppm pro % der Artikeldicke bis 100 ppm pro % der Artikeldicke liegt.

10. Vorspannbarer Glasartikel nach mindestens einem der Ansprüche 1 bis 6 und 8 bis 9, wobei das Glas die folgenden Bestandteile aufweist:

| | (Gew.-%) |
|---|---|
| $SiO_2$ | 40-75 |
| $Al_2O_3$ | 10-30 |
| $B_2O_3$ | 0-20 |

(fortgesetzt)

| | (Gew.-%) |
|---|---|
| $Na_2O + K_2O$ | >0-30 |
| $MgO + CaO + SrO + BaO + ZnO$ | 0-25 |
| $TiO_2 + ZrO_2$ | 0-15 |
| $P_2O_5$ | 0-10 |

**11.** Vorspannbarer Glasartikel nach mindestens einem der vorhergehenden Ansprüche, wobei die Rautiefe $R_t$ höchstens 6 nm beträgt.

**12.** Vorspannbarer Glasartikel nach mindestens einem der vorhergehenden Ansprüche, wobei die Oberflächendruckspannung nach der chemischen Vorspannung auf eine Tiefe $x_c$ von 30% der Artikeldicke in einem Bereich von 600 MPa bis 1000 MPa liegt.

**13.** Verfahren zur Herstellung eines vorspannbaren Glasartikels nach mindestens einem der vorhergehenden Ansprüche umfassend den folgenden Schritt:

a) Bereitstellen eines Glasartikels in einem Ziehverfahren.

**14.** Verfahren nach Anspruch 13, wobei die Ziehgeschwindigkeit in einem Bereich von 10 m/min bis 40 m/min liegt.

**15.** Verfahren nach mindestens einem der Ansprüche 13 und 14, wobei das Ziehverfahren ausgewählt ist aus der Gruppe bestehend aus Downdraw, Overflow-Fusion und Wiederziehen.

**Figur 1**

**Figur 2**

**Figur 3**

**Figur 4**

## EUROPÄISCHER RECHERCHENBERICHT

Nummer der Anmeldung

EP 22 16 6762

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2012/088648 A1 (ELLISON ADAM J [US] ET AL) 12. April 2012 (2012-04-12) * Absätze [0004] – [0007], [0018] – [0023], [0027], [0049] – [0050]; Tabelle 2 * | 1-15 | INV. C03C3/083 C03C21/00 |
| | ----- | | |
| X | US 2011/048074 A1 (DANIELSON PAUL S [US] ET AL) 3. März 2011 (2011-03-03) * Absätze [0004] – [0008], [0023] – [0032]; Abbildungen 1,2; Beispiel 1; Tabelle 1 * | 1-12 | |
| | ----- | | |
| X | US 2020/095155 A1 (BURDETTE STEVEN ROY [US] ET AL) 26. März 2020 (2020-03-26) * Absätze [0006] – [0007], [0049] – [0050], [0071] – [0077], [0085] – [0087]; Tabelle 1 * | 1-15 | |
| | ----- | | RECHERCHIERTE SACHGEBIETE (IPC) |
| A | ADAM ELLISON ET AL: "Glass Substrates for Liquid Crystal Displays", INTERNATIONAL JOURNAL OF APPLIED GLASS SCIENCE, Bd. 1, Nr. 1, 1. März 2010 (2010-03-01), Seiten 87-103, XP055302367, ISSN: 2041-1286, DOI: 10.1111/j.2041-1294.2010.00009.x * das ganze Dokument * | 1-15 | C03C |
| | ----- | | |

Der vorliegende Recherchenbericht wurde für alle Patentansprüche erstellt

| Recherchenort | Abschlußdatum der Recherche | Prüfer |
|---|---|---|
| München | 7. September 2022 | Lecerf, Nicolas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 22 16 6762

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-09-2022

| Im Recherchenbericht angeführtes Patentdokument | Datum der Veröffentlichung | Mitglied(er) der Patentfamilie | | Datum der Veröffentlichung |
|---|---|---|---|---|
| US 2012088648 A1 | 12-04-2012 | CN | 102531386 A | 04-07-2012 |
| | | EP | 2465829 A1 | 20-06-2012 |
| | | JP | 6149284 B2 | 21-06-2017 |
| | | JP | 6289578 B2 | 07-03-2018 |
| | | JP | 2012082130 A | 26-04-2012 |
| | | JP | 2017007945 A | 12-01-2017 |
| | | KR | 20120035903 A | 16-04-2012 |
| | | TW | 201219334 A | 16-05-2012 |
| | | US | 2012088648 A1 | 12-04-2012 |
| US 2011048074 A1 | 03-03-2011 | CN | 101400614 A | 01-04-2009 |
| | | CN | 103121796 A | 29-05-2013 |
| | | CN | 103172259 A | 26-06-2013 |
| | | EP | 1996525 A1 | 03-12-2008 |
| | | JP | 5553511 B2 | 16-07-2014 |
| | | JP | 5852598 B2 | 03-02-2016 |
| | | JP | 6417575 B2 | 07-11-2018 |
| | | JP | 2009525942 A | 16-07-2009 |
| | | JP | 2013082626 A | 09-05-2013 |
| | | JP | 2013082627 A | 09-05-2013 |
| | | JP | 2016026138 A | 12-02-2016 |
| | | KR | 20080098058 A | 06-11-2008 |
| | | US | 2007191207 A1 | 16-08-2007 |
| | | US | 2011048074 A1 | 03-03-2011 |
| | | US | 2013065747 A1 | 14-03-2013 |
| | | US | 2014243186 A1 | 28-08-2014 |
| | | WO | 2007095115 A1 | 23-08-2007 |
| US 2020095155 A1 | 26-03-2020 | CN | 110785388 A | 11-02-2020 |
| | | JP | 2020523273 A | 06-08-2020 |
| | | KR | 20200008174 A | 23-01-2020 |
| | | TW | 201905622 A | 01-02-2019 |
| | | US | 2020095155 A1 | 26-03-2020 |
| | | WO | 2018232153 A2 | 20-12-2018 |

EPO FORM P0461

Für nähere Einzelheiten zu diesem Anhang : siehe Amtsblatt des Europäischen Patentamts, Nr.12/82